Europäisches Patentamt

European Patent Office

Office européen des brevets

(19)

(11) Numéro de publication: **0 237 422**
**B1**

(12) **FASCICULE DE BREVET EUROPEEN**

(45) Date de publication du fascicule du brevet: **08.08.90**

(51) Int. Cl.⁵: **A 01 B 3/46**

(21) Numéro de dépôt: **87400488.0**

(22) Date de dépôt: **05.03.87**

(54) **Système de commande hydraulique perfectionné pour charrue semi-portée réversible à roue porteuse orientable.**

(30) Priorité: **06.03.86 FR 8603210**

(43) Date de publication de la demande:
**16.09.87 Bulletin 87/38**

(45) Mention de la délivrance du brevet:
**08.08.90 Bulletin 90/32**

(84) Etats contractants désignés:
**BE DE GB**

(56) Documents cités:
**FR-A-1 509 474**
**FR-A-1 592 549**
**FR-A-2 560 478**

(73) Titulaire: **SOCIETE DES CHARRUES BONNEL**
**Route Départementale 840**
**F-27110 Le Neubourg (FR)**

(72) Inventeur: **Bonnel, Daniel**
**Le Troncq**
**F-27110 le Neubourg (FR)**

(74) Mandataire: **Rinuy, Santarelli**
**14, avenue de la Grande Armée**
**F-75017 Paris (FR)**

Courier Press, Leamington Spa, England.

EP 0 237 422 B1

**Description**

La présente invention concerne un système de commande hydraulique perfectionné applicable à toute charrue semi-portée de type réversible sous l'action d'au moins un vérin de retournement et pourvue d'au moins une roue arrière porteuse orientable, sous l'action d'un vérin double effet.

On connaît déjà des systèmes de commande de ce type où l'orientation de le roue est synchronisée avec le retournement des corps de labour.

Grâce à cette orientation de la roue porteuse, on voit que dans la position labour, à droite ou à gauche, la ou les roues porteuses se positionnent parallèlement à l'axe de progression du tracteur, le châssis de la charrue s'orientant à droite ou à gauche d'un angle voisin de 20° suivant la largeur des corps de labour.

On sait qu'il existe à l'heure actuelle plusieurs dispositifs fonctionnant suivant des principes à commande mécaniques ou hydrauliques et notamment, dans ce dernier cas, le dispositif faisant l'objet du brevet français 2560478 du 2 mars 1984 au nom de la demanderesse.

Le système de commande hydraulique perfectionné conforme à l'invention a pour objet principal d'augmenter la maniabilité de l'attelage tracteur-charrue, tant en labour pour les manoeuvres en extrémité de champ que pour le transport sur route, la roue porteuse peut être manoeuvrée dans son orientation, indépendamment du retournement des corps de labour.

Suivant une autre caractéristique de la présente invention, toutes les manoeuvres précitées: retournement, orientation de la roue porteuse pour le labour et en extrémités de champ ou en cours de transport sur route, le conducteur du tracteur n'a à utiliser qu'une seule manette de commande, en l'occurence un levier du distributeur hydraulique double effet du tracteur.

Il est important de signaler que le système de commande hydraulique perfectionné conforme à l'invention apporte, en plus des fonctions rappelées ci-dessus, une diminution importante des contraintes sur les bras d'attelage du tracteur, au moment du retournement de la charrue.

Le système de commande suivant l'invention se caractérise par le fait que, dans le système d'alimentation hydraulique commun du vérin de retournement des corps de labour et du vérin double effet d'orientation de la roue porteuse est aménagé, entre une tubulure d'alimentation d'un vérin de retournement et le vérin d'orientation de la roue porteuse, un dispositif vanne-camme agencé pour ouvrir la vanne, lorsque le châssis de la charrue est sensiblement en ligne avec l'axe de progression du tracteur et à fermer cette vanne lorsque le vérin d'orientation de la roue porteuse arrive en butée, ce qui bloque la roue porteuse en position oblique, les vannes de séquence et les vannes à boisseau incorporées dans l'alimentation du vérin de retournement libérant dans ce dernier cas le passage d'alimentation dudit vérin de retournement, suivant le côté choisi et le retournement s'opère, grâce à quoi, il est possible d'orienter la roue porteuse, indépendamment du retournement des corps de labour, tant en labour, pour les manoeuvres en extrémité de champ que pour le transport sur route.

Suivant une forme de réalisation avantageuse, le dispositif vanne-camme est constitué d'une came solidaire de la partie avant de la poutre-châssis de la charrue et d'une vanne solidaire de la partie rotative du cadre porte corps de labour, ladite vanne comportant un galet de commande venant porter sur la came, laquelle est déterminée de façon qu'elle maintient la vanne en position d'ouverture lorsque l'axe longitudinal de la charrue se trouve en ligne avec le tracteur et provoque la fermeture de ladite vanne, lorsque le vérin de commande d'orientation de la roue porteuse arrive en position de butée à droite ou à gauche.

D'autres caractéristiques, avantages et particularités de la présente invention ressortiront de la description qui en est donnée ci-après en référence aux dessins annexés représentant, à titre d'exemple préférentiel, une forme de réalisation possible de ladite invention.

Sur ces dessins:

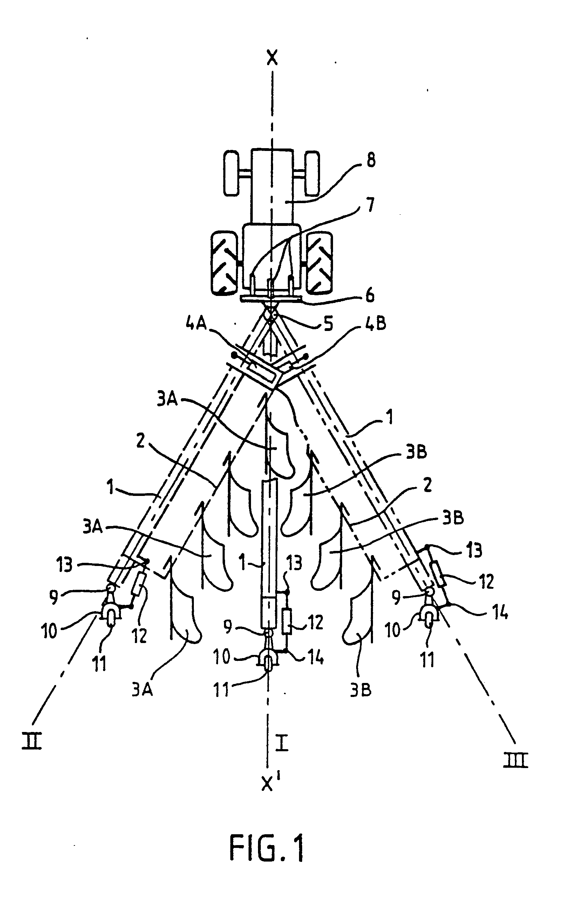

La Figure 1 est un schéma explicatif très simplifié représentant, simultanément, les trois positions essentielles que la charrue peut occuper, successivement, par rapport au tracteur, étant à noter qu'en l'occurrence: 1°) il s'agit d'une charrue semi-portée de type réversible demi-tour et pourvue d'une seule roue porteuse arrière; 2°) dans un but de simplification de la figure, seuls les corps de labour travaillant sont représentés dans les deux positions de labour de la charrue, à droite et à gauche, et que lesdits corps de labour ne sont pas représentés du tout dans la position médiane de transport de la charrue;

La Figure 2 est un schéma explicatif représentant l'interconnexion hydraulique des éléments constitutifs essentiels de commande de la charrue de la Figure 1, lorsque ladite charrue évolue en position de transport ou au cours de manoeuvres de sortie de raie, en extrémité de champ et de reprise du labour;

La Figure 2A est un schéma explicatif complémentaire montrant le fonctionnement du dispositif came-vanne;

La Figure 3 est un schéma explicatif analogue à celui de la Figure 2 mais, cette fois, lorsque la charrue évolue en position de labour à gauche.

et la Figure 3A est un schéma explicatif complémentaire montrant le fonctionnement du dispositif came-vanne.

Comme on l'a vu précédemment, l'invention s'applique également sans modification du principe de base à toute charrue semi-portée de type reversible quart ou demi-tour et pourvue d'une ou de deux roues porteuses arrière.

Sur les schémas, on a pris le cas d'application de l'invention, à titre d'exemple préférentiel, à une charrue reversible demi-tour comportant une seule roue porteuse à l'arrière et quatre corps de labour.

Ce type de charrue étant d'un type couramment utilisé, on ne la décrira pas en détail, mais on se contentera de rappeler ses caractéristiques essentielles en se reportant à la Figure 1.

Le châssis est généralement constitué d'une poutre tubulaire 1 sur les extrémités avant et arrière de laquelle est monté à pivot le cadre 2 supportant perpendiculairement à lui les corps de labour 3A, susceptibles de travailler à droite, et 3B susceptibles de travailler à gauche, étant à noter que le soc avant n'est pas représenté pour la clarté du dessin. Le pivotement dudit cadre support 2, pour passer de la position médiane I, pour laquelle il est vertical, soit à la position de labour à droite II, soit à la position de labour à gauche III, est obtenu au moyen de deux vérins simple effet 4A et 4B, articulés, l'un et l'autre, d'une part, sur une partie solidaire du châssis 1, d'autre part, sur une partie solidaire du cadre support pivotant 2.

Par ailleurs, la partie avant de la poutre châssis 1 s'articule sur un axe de rotation vertical 5 solidaire d'un système d'attelage classique trois points désigné par la référence 6 et qui vient s'adapter sur le système complémentaire classique 7 d'un tracteur adéquat 8.

La partie arrière de la poutre châssis 1 comporte un axe d'articulation vertical 9 sur lequel peut pivoter la fourche 10 de support de la roue porteuse 11, sous l'action d'un vérin d'orientation double effet 12 articulé, d'une part, sur un axe 13 solidaire de la poutre châssis 1, d'autre part, sur un axe 14 solidaire de la fourche 10 de la roue porteuse 11.

On voit immédiatement que grâce à la roue porteuse orientable 11, il est possible d'amener le châssis 1 de la charrue soit dans la position de labour à droite II, soit dans la position de labour à gauche III, pour lesquelles le châssis fait un angle voisin de 20° par rapport à la ligne médiane I, cet angle étant fonction de la largeur des corps de labour qui est la même pour les corps 3A et 3B. Il est à noter que dans ces positions de labour la roue porteuse 11 se déplacé parallèlement à l'axe de progression XX' du tracteur.

On sait que l'orientation de la roue porteuse 11 doit être synchronisée avec le retournement des socs de la charrue.

Il existe à l'heure actuelle, pour ce faire, plusieurs dispositifs à commandes mécaniques ou hydrauliques, notamment celui décrit dans le brevet français précité de la Demanderesse.

Suivant une caractéristique avantageuse de la présente invention qui sera décrite en détail ci-après, on augmente, dans de grandes proportions, la maniabilité de l'attelage tracteur-charrue, tant en labour pour les manoeuvres en extrémité de champ que pour le transport sur route, en permettant que la roue porteuse puisse être manoeuvrée dans son orientation, indépendamment du retournement des corps de labour.

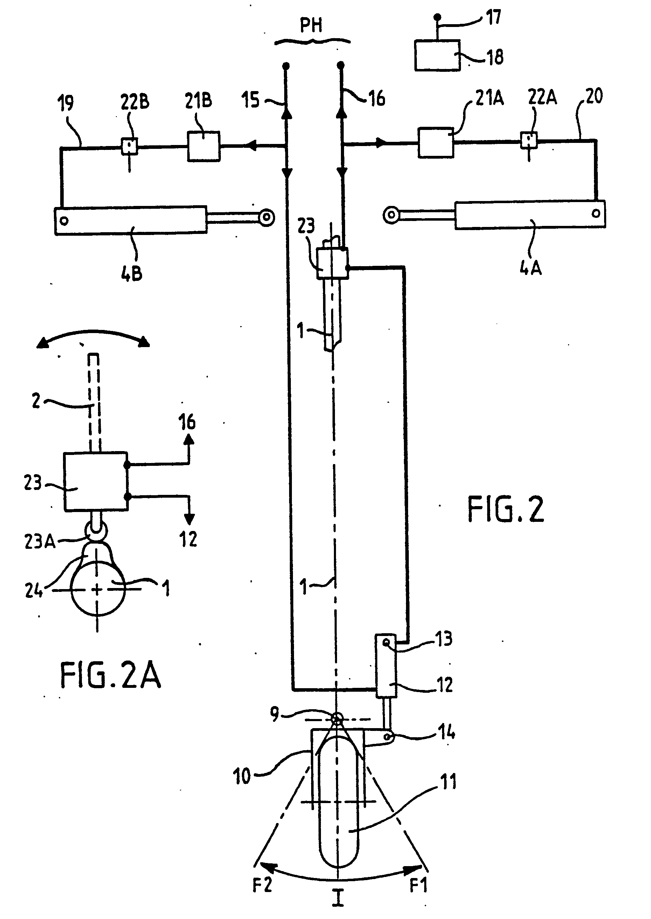

On se référera, pour cette description, tout d'abord à la Figure 2 sur laquelle on a schématisé l'ensemble de la chaîne cinématique ainsi que de l'interconnection hydraulique des éléments de commande de l'allure de la charrue, en cours de transport sur route ou en cours de manoeuvres en bout de champ.

Sur ce schéma, on a représenté les vérins simple effet 4A et 4B de commande de basculement du cadre support 2 des corps de labour 3A et 3B, ainsi que la roue porteuse arrière 11, la fourche 10 de support de cette roue ainsi que le vérin double-effet 12 commandant l'orientation de ladite roue porteuse 11.

Conformément à l'invention, la pression hydraulique PH du tracteur est appliquée sélectivement aux entrées de deux tubulures d'alimentation 15 et 16 de la charrue au moyen de la manette de commande 17 d'un distributeur hydraulique double effet 18 du tracteur.

Sur ces tubulures 15 et 16 sont branchées respectivement les tubulures d'alimentation 19 du vérin simple effet 4B, d'une part, et 20 du vérin simple effet 4A, d'autre part, commandant le basculement du cadre support 2 des corps de labour 3A et 3B.

Ces canalisations 19 et 20 comportent, chacune une vanne de séquence classique: 21A pour la tubulure 20 et 21B pour le tubulure 19, étant à noter que ces vannes de séquence sont réglées suivant une pression définie, et commandent respectivement la fermeture ou l'ouverture de vannes à boisseau respectives 22A pour la tubulure 20 et 22B pour la tubulure 19 commandant l'ouverture ou la fermeture du vérin correspondant.

Par ailleurs, suivant une autre caractéristique de l'invention, l'une des tubulures, 15 par exemple, est reliée directement à l'une des extrémités du vérin double effet 12 provoquant la rotation de la roue porteuse 11 dans le sens de la flèche F1, tandis que l'autre tubulure 16 est reliée à l'autre extrémité du vérin 12 provoquant la rotation de la roue porteuse 11 dans le sens de la flèche F2, étant important de noter que cette canalisation 16 comporte une vanne de fermeture 23 commandée par une came 24.

Conformément à une caractéristique importante de l'invention (voir Figure 2A), la came 24 est solidaire de l'axe de la partie avant de la poutre châssis 1 de la charrue, tandis que la vanne 23 est solidaire de la partie rotative du cadre 2 portant les corps de labour 3A et 3B. La vanne 23 comporte un galet 23A de commande venant porter sur la came 24, laquelle est déterminée de façon qu'elle maintient la vanne 23 en position d'ouverture lorsque l'axe longitudinal de la charrue se trouve en ligne avec le tracteur (voir Figure 2) et provoque la fermeture de ladite vanne lorsque le vérin de commande d'orientation de la roue 11 arrive en position de butée dans le sens F1 ou dans le sens F2.

Il apparaît à la lecture des figures 1, 2 et 2A que, en position de transport sur route, ie suffit d'actionner la manette 17 du distributeur double effet 18 pour ramener les corps de labour 3A et 3B en position horizontale, étant entendu que, dès que la charrue arrive à quelques degrés de sa position en ligne avec le tracteur, la came 24 ouvre la vanne 23.

Sous l'effet des valves de séquence 21A et 21B, l'alimentation des vérins 'a et 4B est coupée par les vannes à boisseau 22A et 22B.

A partir de ce moment, le distributeur double effet 18 intervient directement sur le vérin d'orientation 12 de la roue porteuse 11, ce qui permet au conducteur du tracteur de diriger ladite roue à droite ou à gauche au moyen de la manette 17.

En résumé, on voit que, comme il a été exposé précédemment, l'invention permet de manoeuvrer la roue porteuse 11 dans son orientation, indépendamment du retournement des corps de labour, ce qui augmente considérablement la maniabilité de l'attelage tracteur-charrue pour le transport sur route et, comme on le verra en détail plus loin, durant les manoeuvres en extrémité de champ, pour la sortie de raie et la reprise du labour.

Conformément à une autre caractéristique avantageuse de l'invention, on améliore le confort d'utilisation du matériel par le fait que le conducteur du tracteur n'a à utiliser que la seule manette de commande 17 du distributeur hydraulique 18 pour assurer toutes les manoeuvres nécessaires, comme: retournement, l'orientation de la roue porteuse 11 pour le labour ainsi que pour les manoeuvres en bout de champ et pour le transport sur route.

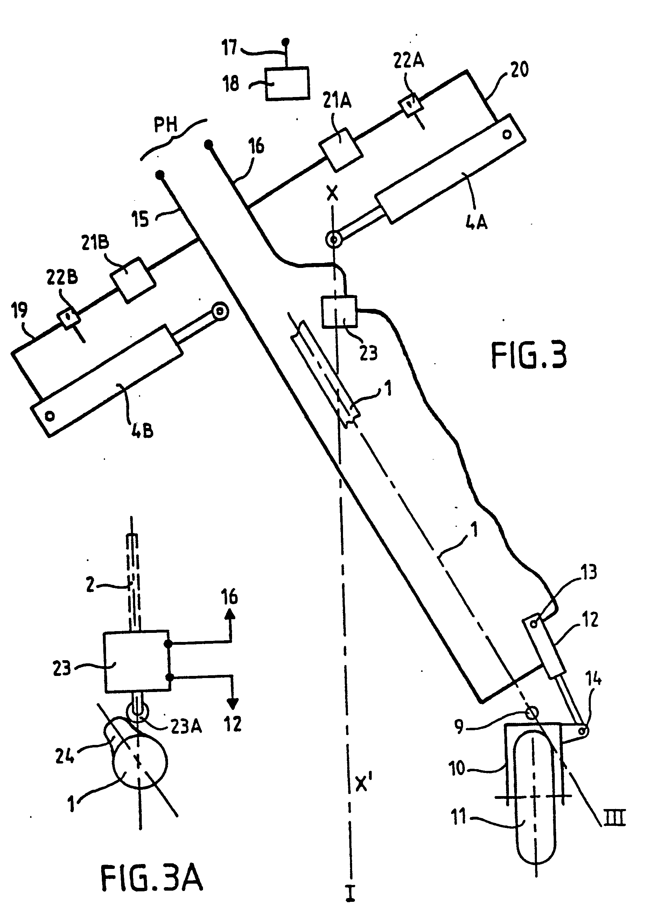

On va maintenant examiner le fonctionnement du système de commande selon l'invention dans le cas de labour à droite ou à gauche, en se référant aux figures 3 et 3A sur lesquelles on a reporté les mêmes références que celles des figures 2 et 2A pour désigner les mêmes éléments.

La charrue étant en position de la figure 2, on actionne le levier de commande 17 du distributeur hydraulique 18 dans le sens correspondant au côté de labour choisi, par exemple vers la gauche. Le distributeur 18 alimente la tubulure 16 en pression et la tubulure 15 en retour.

Les vannes de séquence 21A et 21B étant réglées à une pression déterminée, provoquent l'ouverture des vannes à boisseau 22A et 22B.

La came 24 étant encore dans le prolongement de la ligne de progression XX' du tracteur, maintient le galet 23A de la vanne 23 en position d'ouverture, la roue proteuse 11 pivote dans le sens de la flèche F2 correspondant au sens du labour choisi. Le châssis 1 de la charrue s'oriente progressivement vers la position III.

Dès que le vérin d'orientation 12 arrive en butée, les valves de séquence 21A et 21B libèrent alors le passage d'alimentation d'un des vérins 4A, 4B, suivant le côté choisi, en l'occurrence le vérin 4B, et le retournement s'opère.

Le galet 23A de la vanne 23 (voir Figure 3A) échappe à la came 24 et ferme ladite vanne, la roue porteuse 11 se trouvant alors bloquée dans la position de la Figure 3 pour laquelle elle se déplace parallèlement à l'axe de progression XX' du tracteur sur la droite de ce dernier.

Pour exécuter la manoeuvre de sortie de raie, en extrémité de champ, et reprise du labour, le conducteur actionne la manette 17 du distributeur double effet 18 et façon telle que les alimentations par les tubulures 15 et 16 provoquent, en fonction du côté de labour choisi, le fonctionnement de celui des deux vérins 4A ou 4B devant effectuer le retournement des corps de labour 3A, 3B pour inverser le sens de travail.

A ce moment sous l'action du pivotement du cadre support 2 entraînant la vanne 23, le galet 23A revient dans l'alignement de la came 24, ce qui provoque l'ouverture de la vanne 23.

Sous l'effet des valves de séquence 21A, 21B, l'alimentation des vérins 4A, 4B est coupée par les vannes à boisseau 22A, 22B, ladite alimentation se dirigeant directement sur le vérin d'orientation 12 de la roue porteuse 11, laquelle est ramenée dans sa position médiane en ligne avec la poutre châssis.

Si le conducteur du tracteur le souhaite, il peut alors, toujours au moyen de la manette de commande 17 du distributeur 18 du tracteur, manoeuvrer la roue porteuse 11 à droite et à gauche, indépendamment du retournement des corps de labour, ceci dans le but d'augmenter la maniabilité de l'attelage tracteur-charrue pour l'amener en ligne, en position de reprendre le labour.

A ce moment et toujours avec la manette de commande 17 du distributeur 18 du tracteur, le conducteur provoque de la manière qui a été décrite précédemment la reprise du cycle de retournement des corps de labour, dès que la roue porteuse 11 se trouve positionnée dans son orientation labour. Dès que le vérin 12 arrive en butée, les valves de séquence 21A, 21B libèrent, par l'ouverture des vannes à boisseau 22A, 22B l'alimentation sur les vérins 4A, 4B en fonction du côté qui a été choisi, ce qui provoque le retournement. Le galet 23A de la vanne 23 échappe à la came 24 et ferme ladite vanne, la roue porteuse 11 se trouvant alors bloquée dans la position opposée à celle de la figure 3 pour laquelle elle se déplace parallèlement à l'axe de progression XX' du tracteur sur la gauche de ce dernier.

Il est important de noter que, durant toutes les manoeuvres ci-dessus, l'orientation de la roue porteuse 11, place le point d'appui au sol dans les meilleures conditions pour diminuer la contrainte de porte à faux de l'ensemble et, notamment, une diminution importante des contraintes sur les bras d'attelage du tracteur, au moment du retournement de la charrue.

C'est ainsi que l'invention s'applique à toute charrue semi-portée de type réversible quart-de-tour ou demi-tour et pourvue d'une ou de deux roues porteuses arrière.

**Revendications**

1. Système de commande hydraulique perfectionné applicable à toute charrue semi-portée de type reversible sous l'action d'au moins un vérin de retournement (4A, 4B) et pourvue d'au moins une roue arrière porteuse (11) orientable sous l'action d'un vérin double effet (12), ledit système de commande hydraulique étant caractérisé par le fait que, dans le système d'alimentation hydraulique commun (15, 16, 19, 20) du vérin de retournement (4A ou 4B) des corps de labour (3A, 3B) et du vérin double effet (12) d'orientation de la roue porteuse (11) est aménagé entre une tubulure d'alimentation (20) d'un vérin de retournement (4A) et le vérin d'orientation (12) de la roue porteuse (11), un dispositif vanne-came (23, 23A, 24) agencé pour ouvrir la vanne (23) lorsque le châssis (2) de la charrue est sensiblement en ligne avec l'axe de progression (XX') du tracteur et à fermer cette vanne (23) lorsque le vérin d'orientation (12) de la roue porteuse (11) arrive en butée, ce qui bloque la roue porteuse (11) en position oblique, les vannes de séquence (21A, 21B) et les vannes à boisseau (22A, 22B) incorporées dans l'alimentation (19, 20) du vérin de retournement (4A ou 4B) libérant dans ce dernier cas le passage d'alimentation dudit vérin de retournement, suivant le côté choisi et le retournement s'opère, grâce à quoi, il est possible d'orienter la roue porteuse (11), indépendamment du retournement des corps de labour, tant en labour pour les manoeuvres en extrémité de champ que pour le transport sur route.

2. Système de commande hydraulique suivant la revendication 1, caractérisé en ce que toutes les commandes concernant le retournement des corps de labour (3A, 3B) et l'orientation de la roue porteuse (11) pour la labour ainsi que les manoeuvres en bout de champ et le transport sur route sont effectuées au moyen d'un levier unique (17) du distributeur hydraulique double effet (18) du tracteur.

3. Système de commande hydraulique suivant l'une quelconque des revendications 1 ou 2, caractérisé en ce que le dispositif vanne-came (23, 23A, 24) est constitué d'une came (24) solidaire de la partie avant de la poutre châssis (1) de la charrue, et d'une vanne (23) solidaire de la partie rotative du cadre (2) portant, les corps de labour (3A, 3B), ladite vanne comportant un galet (23A) de commande venant porter sur la came (24), laquelle est déterminée de façon qu'elle maintient la vanne (23) en position d'ouverture lorsque l'axe longitudinale de la charrue se trouve en ligne (I) avec le tracteur et provoque la fermeture de ladite vanne, lorsque le vérin de commande d'orientation (12) de la roue porteuse (11) arrive en position du butée (F1 ou F2).

**Patentansprüche**

1. Verbessertes Hydrauliksteuersystem, anwendbar auf jeden Aufsattelpflug der unter Einwirkung eines Wendezylinders (4A, 4B) reversiblen Art, der mit mindestens einem hinteren unter Einwirkung eines doppeltwirkenden Zylinders (12) ausrichtbaren Stützrad (11) versehen ist, wobei das hydraulische Steuersystem dadurch gekennzeichnet ist, daß in dem gemeinsamen Hydraulik-Speisesystem (15, 16, 19, 20) des Wendezylinders (4A oder 4B) des Pfluggehäuses (3A, 3B) und des doppeltwirkenden Ausrichtzylinders (12) des Stützrades (11) zwischen einer Speiseverrohrung (20) eines Wendezylinders (4A) und dem Ausrichtzylinder (12) des Stützrades (11) eine Nocken-Ventilvorrichtung (23, 23A, 24) vorgesehen ist, die eingerichtet ist zum Öffnen des Ventils (23), wenn der Rahmen (2) des Pfluges im wesentlichen mit der Fortbewegungsachse (XX') des Zugmaschine ausgerichtet ist, und zum Schließen des Ventils (23), wenn der Ausrichtzylinder (12) des Stützrades (11) an einen Halt kommt, der das Stützrad (11) in schräger Lage blockiert, wobei die in die Speisung (19, 20) des Wendezylinders (4A oder 4B) aufgenommenen Folgeventile (21A, 21B) und Tankventile (22A, 22B) darin den Speisedurchlaß des Wendezylinders nach der gewählten Seite und der betätigten Wendung freigeben, wodurch es möglich ist, das Stützrad (11) unabhängig von der Wendung des Pflugrahmens sowie den Pflug auszurichten für Manöver am Rande des Feldes wie für den Transport auf der Straße.

2. Hydraulisches Steuersystem nach Anspruch 1, dadurch gekennzeichnet, daß alle Kommandos, die das Wenden der Pflugrahmen (3A, 3B) und das Ausrichten des Stützrades (11) für den Pflug ebenso wie die Manöver am Ende des Feldes und beim Transport auf der Straße betreffen, mittels eines einzigen Hebels (17) des hydraulischen doppeltwirkenden Verteilers (18) der Zugmaschine bewirkt werden.

3. Hydraulisches Steuersystem nach einem der Ansprüche 1 oder 2, dadurch gekennzeichnet, daß die Nocken-Ventilvorrichtung (23, 23A, 24) gebildet ist durch einen mit dem Abschnitt vor dem Rahmenträger (1) des Pfluges einstückigen Nokken (24) und ein an dem Drehteil des Traggestells (2) des Pflugrahmens (3A, 3B) befestigtes Ventil (23), wobei das Ventil eine Steuerrolle (23A) trägt, die gegen den Nocken (24) anliegt und dazu bestimmt ist, das Ventil (23) in Offenstellung zu halten, wenn die Längsachse des Pfluges sich in Ausrichtung (I) mit der Zugmaschine befindet, und das Schließen des Ventils hervorzurufen, wenn der Ausricht-Steuerzylinder (12) des Stützrades (11) in Anschlagstellung (F1 oder F2) kommt.

**Claims**

1. An improved hydraulic control system applicable to any semi-mounted plough of the type which is reversible as a result of the action of at least one reversing jack (4A, 4B) and is provided with at least one rear carrying wheel (11) which can be orientated by means of a double action jack (12), the said hydraulic control system being characterized by the fact that in the common hydraulic supply system (15, 16, 19, 20) to the jack (4A or 4B) for reversing the ploughing bodies (3A, 3B) and the double action jack (12) for orientating the carrying wheel (11), a cam operated valve device (23, 23A, 24) is located between a supply pipe (20) of a reversing jack (4A) and the jack (12) for orientating the carrying wheel (11) which device is designed to open the valve (23) when the chassis (2) of the plough is substantially in line with the axis of advance (XX') of the tractor, and to close the valve (23) when the jack (12) for orientating the carrying wheel (11) arrives at a stop which blocks the carrying wheel (11) in an oblique position, sequence valves (21A, 21B) and plug valves (22A, 22B) incorporated in the supply (19, 20) to the reversing jack (4A or 4B) in this event opening the supply pathway to the respective reversing jack, depending on the side chosen, so that the reversal operates, whereby it is possible to orientate the carrying wheel (11) independently of the reversal of the ploughing bodies, both when ploughing, for the manoeuvres at the ends of the field, and for transport.

2. A hydraulic control system according to Claim 1, characterized in that all the control operations relating to the reversal of the ploughing bodies (3A, 3B) and the orientation of the carrying wheel (11) for ploughing, as well as for the manoeuvres at the ends of the field and for transport, are effected by means of a single lever (17) of the double action hydraulic distributor (18) of the tractor.

3. A hydraulic control system according to either one of Claims 1 or 2, characterized in that the cam operated valve device (23, 23A, 24) is constituted by a cam (24) fixed to the front part of the chassis beam (1) of the plough and a valve (23) fixed to the rotatable part of the frame (2) carrying the ploughing bodies (3A, 3B), the said valve comprising a plate cam (23) which comes to bear on the cam (24) which is so arranged that it maintains the valve (23) in the open position when the longitudinal axis of the plough is in line (I) with the tractor, and causes closing of the said valve when the jack (12) for controlling the orientation of the carrying wheel (11) arrives at a stopped position (F1 or F2).

FIG.1

PH

17

18

19    22B    21B    15    16    21A    22A    20

4B

4A

23

1

2

FIG.2

23

23A

24    1

16

12

FIG.2A

1

13

12

9

14

10

11

F2    I    F1

FIG.3

FIG.3A